Europäisches Patentamt

European Patent Office

Office européen des brevets

(11) Publication number : **0 513 993 A2**

# EUROPEAN PATENT APPLICATION

(21) Application number : **92303086.0**

(22) Date of filing : **08.04.92**

(51) Int. Cl.⁵ : **H04B 10/10**

(30) Priority : **15.04.91 US 685113**

(43) Date of publication of application :
**19.11.92 Bulletin 92/47**

(84) Designated Contracting States :
**DE GB**

(71) Applicant : **AMERICAN TELEPHONE AND TELEGRAPH COMPANY**
**550 Madison Avenue**
**New York, NY 10022 (US)**

(72) Inventor : **Huang, Alan**
**57 Howland Road**
**Middletown, New Jersey 07748 (US)**

(74) Representative : **Watts, Christopher Malcolm Kelway, Dr. et al**
**AT&T (UK) LTD. AT&T Intellectual Property Division 5 Mornington Road**
**Woodford Green Essex IG8 OTU (GB)**

(54) **Differential free space optical signal transmission.**

(57)    Alignment problems are mitigated in connection with optical signal transmission and similar multiple path-supporting transmission media by the use of differential optical transmission. When the source signals are electronic, a complementary signal is developed electronically, and the signal and its complement are each applied to a light emitting device. The light of each of the light emitting devices is collimated with a lens and transmitted to a receiving lens. The two receiving lenses focus their respective collimated input onto photodetectors which convert the light to electronic signals, and the electronic signals of the two photodetectors are applied to a differential amplifier. The two lenses that transmit the signal and its complement for a transmitting pair, and the two lenses that receive the signal and its complement form a receiving pair. To utilize the advantages of this invention, the transmitting pair and the receiving pair need to be aligned with respect to each other so that each of the photodetectors receives approximately the same proportion of the transmitted optical signal of the two light emitting devices, respectively.

FIG. 1

EP 0 513 993 A2

## Technical Field

This invention relates to differential-signal transmission arrangements and more specifically to optical signal transmission arrangements.

## Background of the Invention

One conventional equipment design approach in the electronic arts employs circuit boards on which electronic components are placed, with the circuit boards being plugged into connectors that are attached to a "backplane". The interconnection of the connectors on the backplane is called "backplane interconnections" or "backplane wiring".

Although in many respects the point to point connections on a circuit board are the same as the point to point connections on a backplane, at the very high pulse rates that current electronic circuits try to sustain there is a substantial difference between them. The difference lies in the longer interconnections on the backplane (on the order of magnitude), the larger physical size of the interconnection paths, and the use of the connectors. In consequence of these factors, backplane paths are characterized by substantially larger capacitances and inductances, and those introduce delay, reduce the path's bandwidth, and require more powerful drive circuitry. Impedance matching is another problem for electronic backplanes. Unless the termination impedance of the line and the input impedances of the taps that receive the signal on the line are properly matches, substantial distortion and loss can result (e.g., from reflections and standing waves).

To overcome those problems, many artisans have turned to optics, and almost all use fibers. That is, the circuit board is constructed with a light emitting device (or devices) and means are provided for coupling the light to a fiber, or a collection of fibers, that carries the light to another circuit board. A receiving (distant) circuit board receives the light from the fiber and detects it.

Operating with optical signals, however, presents its own problems. Signal level variations, nodal and chromatic dispersion in the fiber, and other sources of loss and distortion make it necessary to encode the optical signals, if reliable recovery of the original waveform is to be realized. One common approach, for example, is to encode the data so that the number of 1's in the data stream nearly equals the number of zeros. One common level control mechanism is automatic gain control at the receiver. Still, in some applications this is not sufficient (or not possible), and edge detection approaches have been used. The overall sensitivity of edge detection, however, is about 3 db less than comparable AC-coupled designs. Also, significant pulse width distortion is seen in data recovered with edge detectors. This distortion, and the use of positive feedback in edge detection receivers, limits the maximum usable bit rate of such systems.

These problems in the detection of optical signals have lead a few artisans to use differential signal transmission. For example, U.S. Patent No. 4,316,141 proposes the use of two side-by-side optical fibers to transmit an optical signal and its complement. This requires, of course, two fibers for each path. In U.S. patent application 07/591,920 filed Oct 2, 1990, this requirement is abated by sending the signal and its complement over the same fiber, but at two different frequencies.

In the "free-space" environment, a similar approach was taken by Frank et al. in U.S. Patent No. 4,764,984 issued Aug 16, 1988. That patent deals with infrared (IR) communication within a room. Therein, IR emitters are placed at the transmitter modules and IR detectors (e.g., photodiodes) which are exposed to the radiation are connected to the receiving modules through fibers. The IR radiation of the transmitting units is diffused through reflections from walls, floor and ceiling of the room before being received by the detectors. In other words, the communication of Frank et al. is not directional. To increase sensitivity, Frank et al. propose to communicate bipolar optical signals in the form of two preselected wavelength IR signals. That requires, of course, twice as many IR detectors. Differential light detectors are obtained in Frank et al. by including two detectors for each signal, with each tuned to a different one of the preselected IR wavelengths.

No alignment problems exist in the Franks et al. system because the IR radiation is diffused. The lack of directionality, however, severely limits the "channel capacity" of the room because the only way to address a specific receiver is to either use a receiver-specific pair of wavelengths, or to encode the signal itself with destination information. For that reason, directed rather than diffused radiation is more advantageous.

A number of *directed,* free-space, optical interconnection arrangements are known. For example, U.S. Patent No. 4,720,634 issued January 19, 1988 describes an arrangement where a plurality of circuit boards are "connected" to a backplane through optical couplings. The backplane is basically a transparent substrate that includes refractive and reflective areas that are precisely positioned. More specifically, light emitting devices are placed on the boards and in association therewith the backplane includes one or more refractive areas that are precisely situated on the backplane. Light from the device refract off those areas, is collimated through the optical interaction by the grating in that area and is directed to a precisely positioned reflective area (i.e., a mirror). The collimated light reflects off the mirror, is directed to other mirrors, as necessary, and finally is caused to fall on still another precisely positioned refractive area that focuses the collimated light onto a detector of another circuit board.

Needless to say, this arrangement requires extremely careful and precise positioning of the various mirrors and refractive areas on the substrate. It also requires an extremely fine positioning of the circuit boards relative to the substrate.

In the relatively simple arrangement where the number of optical connections between the circuit boards is fairly small, the positioning and alignment problem may be overcome. However, in denser utilizations of the optical backplane, or in an optical computer environment that uses free-space to pass thousands of closely positioned signal paths (e.g., 100x 100 signals in a 1 cm² area), a *directed* communication arrangement such as the one described in '634 patent is unworkable unless there is extreme physical rigidity in the arrangement. Such rigidity can be achieved by substituting the free-space with glass, for example, but that may not be always possible or desirable for other reasons. In any event, there is an urgent need to alleviate the stringent requirements in free-space optical backplane applications.

## Summary of the Invention

In accordance with the principles of this invention, alignment problems are mitigated in free-space optical signal transmission by the use of differential optical transmission. When the source signal are electronic, a complementary signal is developed electronically, and the signal and its complement are each applied to a light emitting device. The light of each of the light emitting devices is collimated with a lens and transmitted to a receiving lens. The two receiving lenses focus their respective collimated input onto photodetectors which convert the light to electronic signals, and the electronic signals of the two photodetectors are applied to a differential amplifier. The two lenses that transmit the signal and its complement form a transmitting pair, and the two lenses that receive the signal and its complement form a receiving pair.

The advantage of the above-described arrangement is that the alignment of the receiving lens with respect to the transmitting pair is not as stringent as before because of the complementary nature of the signal transmission.

## Brief Description of the Drawing

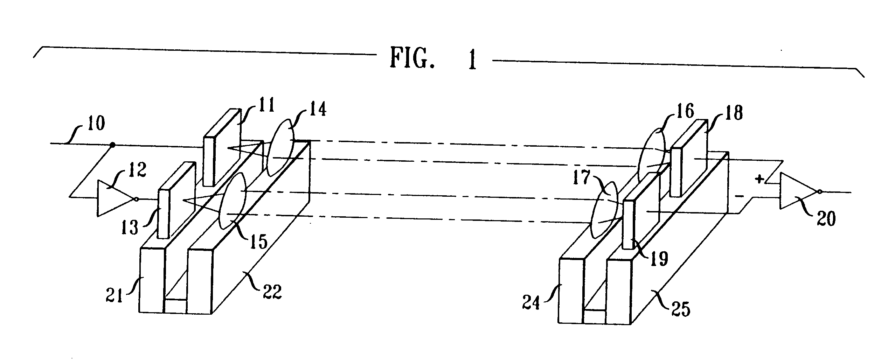

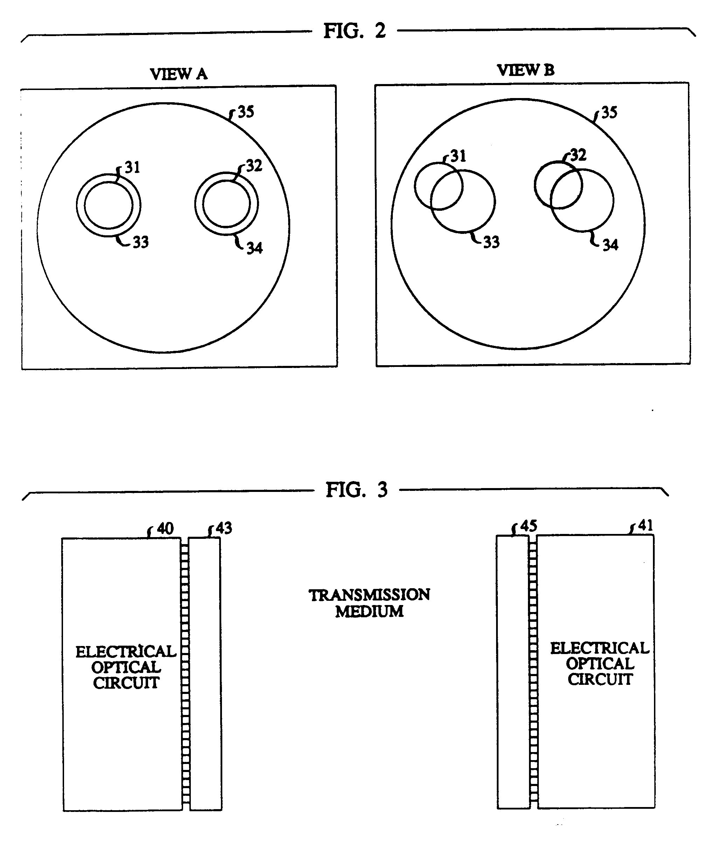

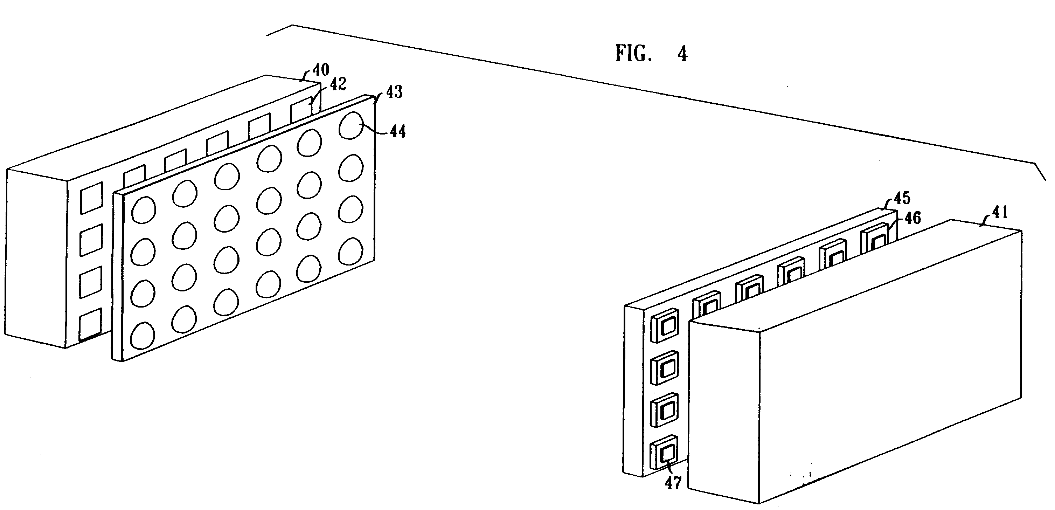

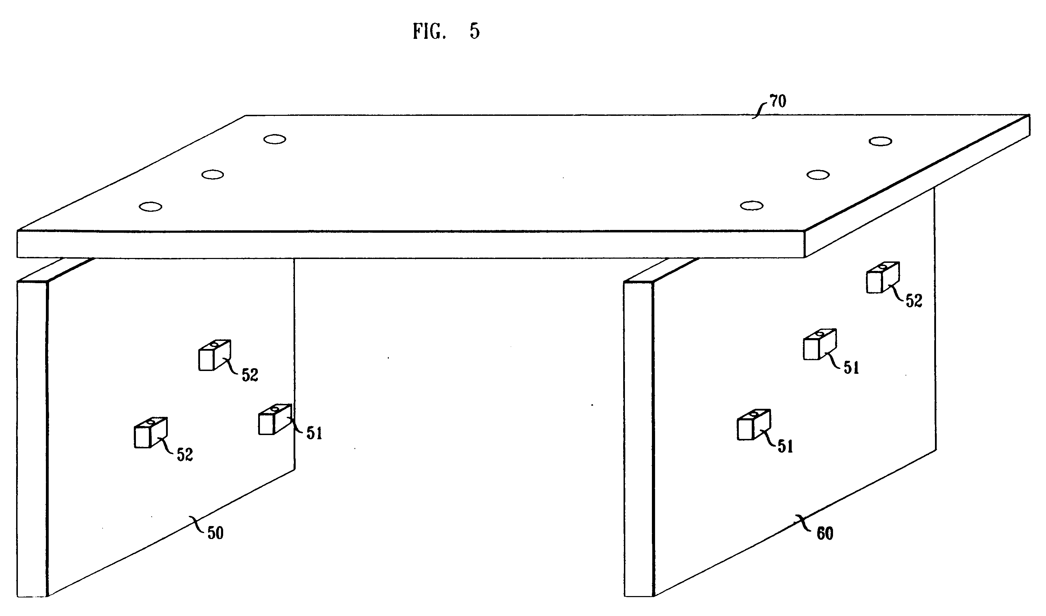

FIG. 1 depicts the electrical and optical setup of single path that employs differential transmission; FIG. 2 illustrates the alignment advantages of this invention; FIG. 3 depicts a "front view" of an arrangement conforming to the principles of this invention that is suitable for massive, parallel, optical communication such as in a free-space optical computer environment; FIG. 4 presents an exploded view of the FIG. 3 arrangement; and FIG. 5 depicts an arrangement conforming to the principles of this invention that is suitable for more conventional backplane applications.

## Detailed Description

FIG. 1 depicts the basic electrical and optical interconnection of a single "dual rail", or differential, signal path. Line 10 receives the input logic signal and applies it to light emitting device 11 and to inverter 12. Inverter 12 inverts the logic signal and applies the developed inverse signal to light emitting device 13. Light emitting devices 11 and 13 may be any suitable light emitting sources, such as LEDs or lasers. The light emitted by device 11 is collimated in lens 14, and the light emitted by device 13 is collimated in lens 15.

In accordance with the principles of this invention, lenses 14 and 15 are fixedly attached to a carrier or a platform 22 and the spacing between the lenses is known to the designer. Similarly, devices 11 and 13 are fixedly attached to a carrier 21, with a given spacing between them. Additionally, carriers 21 and 22 are attached to each other, such as with braces 23, to form a single optical arrangement. Within limits, the spacing between devices 11 and 13 does not have to be the same as the spacing between lenses 14 and 15, the light emitting devices do not have to be in the same place or even in parallel planes, and each of the lenses does not have to be in a plane that is parallel to its respective lens, or coaxially aligned therewith. However, meeting these conditions generally simplifies construction. In fact, platforms 21 and 22 can be a single transparent substrate with the lenses 14 and 15 being constructed on one surface thereof in accordance with known planar optics techniques, and the light emitting devices can be attached, or deposited, or grown onto the opposite surface of the substrate (e.g., surface emitting lasers can be grown, as taught by Huang et al. in U.S. Patent No. 4,999,842 issued March 12, 1991. Such construction can be performed with extremely tight precision, and when that is done, the collimated beans that emanate from lenses 14 and 15 are parallel to each other.

The collimated light beams of lenses 14 and 15 are transmitted to the receiver, where lens 16 is aligned with the received collimated light of lens 14, and lens 17 is aligned with the received collimated light of lens 15. Lens 16 focuses its received collimated light onto a first waist area, and lens 17 focuses its received collimated light onto a second waist area. A photodetector 18 is positioned at the first waist area, and a photodetector 19 is positioned at the second waist area. Neither the waists formed by the focused beams of lenses 16 and 17, nor the active regions of photodetectors 18 and 19 are explicitly shown in FIG.

1, because the isometric drawing hidden those features.

As with the transmitter, lenses 16 and 17 are fixedly positioned onto a carrier 24 and photodetectors 18 and 19 are fixedly positioned onto a carrier 25. Carriers 24 and 25 are attached to each other. The spacing and orientation between lenses 16 and 17 on carrier 24 is set to correspond to the transmitter design. If the transmitter design is such that the collimated beams of lenses 14 and 15 are parallel, then lenses 16 and 17 are positioned on carrier 24 with a spacing that corresponds to the spacing between the collimated beams. That is, the spacing of photodetectors 18 and 19 on carrier 25 and the positioning of carrier 25 vis-a-vis carrier 24 is set to align the photodetectors with the focus waist areas of lenses 16 and 17, as indicated above. Again, the arrangement of carriers 24 and 25 and the lenses and photodetectors can be constructed on a single substrate using conventional techniques, as outlined above, creating an optical arrangement that is extremely accurate.

The output of photodetector 18 is applied to one input of a differential amplifier 20 (e.g., to the non-inverting input) and the output of photodetector 19 is applied to the other input of the differential amplifier (e.g., to the inverting input). The output of amplifier 20 forms the output of the signal connection.

Diagrammatically the arrangement of FIG. 1 is quite simple. In practice, however, the alignment of lenses 16 and 17 with the collimated beams of lenses 14 and 15 is a major problem. An additional problem is that in the free-space environment, ambient optical energy (optical noise) can inject itself between carrier 22 and carrier 24 and be captured by lenses 16 and 17. It turns out that use of the dual rail approach, in accordance with the principles of this invention, diminishes the need to precisely align carriers 22 and 24, and also diminishes the effects of optical noise.

FIG. 2, view A, shows a situation where the alignment between carriers 22 and 24 is perfect. Circles 31 and 32 represent the active regions of the photodetectors, and circles 33 and 34 represent the waist areas of the perfectly aligned beams from carrier 22. Circle 35 represents some ambient optical signal.

When a logic signal is applied to amplifier 12, there is a substantial difference between the light intensity of the collimated beams. In fact, one of the beams may have no light at all. When amplifier 20 is an operational amplifier having an extremely large gain, the output of amplifier 20 is basically the sign of the difference in the signals at the amplifier inputs. That corresponds to the sign of

$$(I_{ambient} \text{ at } 31 + I_{33-31}) - (I_{ambient} \text{ at } 32 + I_{34-32})$$

where $I_{ambient}$ at 31 is the contribution of the ambient light of circle 35 at the detector of circle 31, $I_{ambient}$ at 32 is the contribution of the ambient light of circle 35 at the detector of circle 32, $I_{33-31}$ is the contribution

of circle 33 at the detector of circle 31 (the intersection of the two circles), and $I_{34-32}$ is the contribution of circle 34 at the detector of circle 32 (the intersection of the two circles). Recasting the above equation to

$$(I_{ambient} \text{ at } 31 - I_{ambient} \text{ at } 32) + (I_{33-31} - I_{34-32})$$

it becomes clear that as long as the difference in ambient optical energy received by the two photodetectors is smaller than the difference between the optical energies of the beams as they impinge the photodetector circles 31 and 32, the latter will control the sign and hence the output of amplifier 20.

In FIG. 2, view B, circles 33 and 34 are misaligned with respect to circles 31 and 32. That reduces the difference signal to $\alpha(I_{33-31} - I_{34-32})$, where $\alpha$ equals to 1 when there is complete coincidence between circles 33 and 31. Clearly, as long as $\alpha(I_{33-31} - I_{34-32})$ is larger in magnitude than the difference in the ambient optical energies as addressed above, amplifier 20 still faithfully represents the transmitted logic signal.

FIG. 3 presents a front view of an optical arrangement in conformance with the principles of this invention which is useful in an optical computer environment. FIG. 4 presents an exploded view of the same arrangement. Block 40 contains whatever electrical and optical elements transmitting portion of the system requires. The objective is to transmit selective signals from block 40 to block 41, which contains other electrical and optical elements. In an embodiment where the signals to be transmitted exist in electronic form, pads 42 of block 40 are conditioned to output those electronic signals in dual rail mode. That is, the array of pads 42 of block 40 is really an array of pad pairs. Block 43 is mated with the pads of block 40. Block 43 contains an array of light emitting devices, such as surface emitting lasers, that are grown on the surface facing pads 42. Block 43 is transparent, with lenses 44 created on the surface parallel to the surface on which the light emitting devises are manufactured. Lenses 44 are aligned with the light emitting devices as described above.

An array of collimated beams emanates from block 43 and a transparent substrate 45 is aligned with the array of collimated beams. More particularly, transparent substrate 45 contains an array of lenses, much like the lenses on block 43, and the array of collimated beams is aligned with those lenses as described in connection with FIGs. 1 and 2. On a surface parallel to the surface containing the lenses, an array of photodetectors 46 is applied and positioned as described in connection with FIG. 1. The outputs of detectors 46 appear on pads 47 which are mated with similarly positioned pads on block 41. Block 41 contains the operational amplifiers described in connection with FIG. 1 and all subsequent electronic and optical elements.

FIG. 5 depicts an arrangement that is particularly well suited for optical backplane applications. Therein, circuit board 50 contains receiving module 51 and two transmitting modules 52. Each transmitting module comprises the transmitting elements shown in FIG. 1 and, likewise, the receiving module comprises the receiving elements in FIG. 1. Specifically, transmitting modules 52 each include an inverter, two light emitting devices and two collimating lenses. Receiving module 51 comprises two focusing lenses, two photodetectors and an operational amplifier. In the backplane portion of the FIG. 5 arrangement, the only thing that is needed is means for directing the collimated beams developed by modules 52 to another card, such as card 60. That may simply comprise a glass substrate 70 that includes lenses which are specifically designed to send each transmitted collimated bean to its destination, much like described by D'Auria in the aforementioned '643 patent. Glass substrate 70 is akin to free-space in some regards, and is akin to fibers in another regard. It is like a fiber in that light beams are *confined* to the interior of the glass substrate until they reach their specified exit areas. It is like free-space in that a plurality of different beams, with different entry and exit areas on the glass substrate commingle within the glass substrate. In the context of this invention, I characterize free-space and the glass substrate as "multiple path-supporting" media.

## Claims

1. An optical interconnection arrangement for communicating a given signal to a receiving point comprising:

    means for developing a first optical signal in response to said given signal, and a second optical signal in response to a negation of said given signal;

    a transmission medium for receiving said first optical signal and said second optical signal;

    means for receiving substantially equal fractions of said first optical signal and said second optical signal to developed a first received electronic signal and a second received electronic signal; and

    means for subtracting said second received electronic signal from said first received electronic signal.

2. The arrangement of claim 1 wherein said transmission medium is a multiple path-supporting medium.

3. The arrangement of claim 1 wherein said transmission medium is free space.

4. The arrangement of claim 1 wherein said transmission medium is a bulk material.

5. An optical interconnection arrangement for communicating a given signal to a receiving point comprising:

    means for developing a first optical signal in response to said given signal, and a second optical signal in response to a negation of said given signal;

    a first transmitting lens arranged to develop a first collimated optical signal in response to said first optical signal;

    a second transmitting lens to develop a second collimated optical signals in response to said second optical signal;

    a first receiving lens arranged to receive at least a portion of said first collimated optical signal, for concentrating the received collimated optical signal;

    a second receiving lens arranged to receive at least a portion of said second collimated optical signal, for concentrating the received collimated optical signal;

    a first detector arranged to receive at least a portion of the optical signal concentrated by said first receiving lens;

    a second detector arranged to receive at least a portion of the optical signal concentrated by said second receiving lens; and

    means responsive to said first detector and to said second detector to develop an output signal that relates to the difference between the output signal of said first detector and the output signal of said second detector.

6. The arrangement of claim 5 wherein said first transmitting lens and said second transmitting lens are formed on a single substrate, and first receiving lens and said second receiving lens are formed on a single substrate.

7. The arrangement of claim 6 wherein said first transmitting lens, said second transmitting lens, said first receiving lens and said second receiving lens are planar lenses.

8. The arrangement of claim 5 further comprising a multiple path-supporting transmission medium interposed between said first receiving means and said first transmitting lens.

9. The arrangement of claim 5 further comprising:

    a transmitting lens carrier in which said first transmitting lens and said second transmitting lens are fixedly positioned; and

    a receiving lens carrier in which said first receiving lens and said second receiving lens are fixedly positioned;

    with the positioning of the transmitting lenses in said transmitting carrier and the positioning of the receiving lenses in said receiving carrier arranged so that when said transmitting carrier and said receiving carrier are properly aligned, the output of said first detector in response to said given signal relates to the output of said second detector to the negation of said given signal substantially by a fixed ratio.

10. The arrangement of claim 9 wherein the output of said first detector in response to said given signal is substantially equal to the output of said second detector to the negation of said given signal.

11. An optical interconnection arrangement for communicating a signal from a transmitting section to a receiving section, characterized in that:

said transmitting section comprises

first means for developing a first optical signal in response to an input signal,

second means for developing a second optical signal in response to a negation of said input signal, and

a transmitting carrier including a first transmitting lens and a second transmitting lens, with said receiving carrier, said first transmitting lens and said second transmitting lens arranged for said first transmitting lens to develop a first collimated optical signal in response to said first optical signal, and said second transmitting lens to develop a second collimated optical signals in response to said second optical signal; and

said receiving section comprises

a receiving carrier including a first receiving lens and a second receiving lens, with said carrier, first receiving lens and second receiving lens arranged for said first receiving lens to receive at least a portion of said first collimated optical signal and said second receiving lens to receive at least a portion of said second collimated optical signal, where said lenses are of the type that concentrates received collimated light,

a detector carrier including a first detector and a second detector, with said detector carrier, first detector and second detector arranged for said first detector to receive at least a portion of the optical signal concentrated by said first receiving lens, and for said second detector to receive at least a portion of the optical signal concentrated by said second receiving lens, and

means responsive to said first detector and to said second detector to develop an output signal that relates to the difference between the output signal of said first detector and the output signal of said second detector.

12. An optical interconnection arrangement comprising:

a first circuit board that includes an optical signal transmitting module that comprises means for developing a first optical signal in response to a given signal and a second optical signal in response to a negation of said given signal;

a second circuit board that includes an optical signal receiving module that comprises

a first means for receiving an optical signal and developing an electronic signal therefrom,

a second means for receiving an optical signal and developing an electronic signal therefrom, and

differential amplifier means responsive to the electronic signals developed by said first means for receiving an optical signal and by said second means for receiving an optical signal; and

an optical multiple path-supporting transmission medium coupled to said transmitting module and to said receiving module to allow at least a fraction of the optical signal developed by said means for developing a first optical signal to reach said first means for receiving an optical signal and a substantially equal fraction of the optical signal developed by said means for developing a second optical signal to reach said second means for receiving an optical signal.

FIG. 1

FIG. 2

VIEW A

VIEW B

FIG. 3

ELECTRICAL OPTICAL CIRCUIT

TRANSMISSION MEDIUM

ELECTRICAL OPTICAL CIRCUIT

FIG. 4

9

FIG. 5

EP 0 513 993 A2